# EUROPÄISCHE PATENTSCHRIFT

(11) **EP 1 080 997 B1**
(45) Veröffentlichungstag und Bekanntmachung des Hinweises auf die Patenterteilung: **09.06.2004**
(21) Anmeldenummer: 00118227.8
(22) Anmeldetag: 01.09.2000
(51) Int. Cl.: B60R 21/16, D03D 15/02

(54) **Gassack-Schutzeinrichtung**
Airbag protection device
Dispositif de protection à coussin gonflable

(30) Priorität: 01.09.1999 DE 29915364 U
(43) Veröffentlichungstag der Anmeldung: 07.03.2001
(73) Patentinhaber: TRW Automotive GmbH, 73553 Alfdorf (DE)
(72) Erfinder: Heigl, Jürgen, 73560 Böbingen (DE)
(74) Vertreter: Kitzhofer, Thomas, Dipl.-Ing.

(56) Entgegenhaltungen:
- EP-A- 0 687 596
- EP-A- 0 875 426
- DE-A- 3 903 216
- DE-A- 4 324 487
- DE-A- 19 622 225
- DE-A- 19 654 490
- DE-A- 19 816 061
- GB-A- 2 312 877
- US-A- 3 991 249
- US-A- 5 865 464

## Beschreibung

Die Erfindung betrifft eine Gassack-Schutzeinrichtung, mit einem Gassack aus wenigstens zwei gegenüberliegenden Gewebelagen, die wenigstens eine mit Gas befüllbare Kammer begrenzen, wobei die Gewebelagen aus Kett- und Schußfäden bestehen, wobei der Gassack wenigstens einen Abstandshalter, der mit den Gewebelagen verbunden ist und in aufgeblasenem Zustand den Abstand der Gewebelagen voneinander begrenzt und wenigstens zwei Abspannstellen aufweist, an denen er an dem Fahrzeug zu befestigen ist und zwischen denen er sich im aufgeblasenen Zustand verspannt.

Eine Gassack-Schutzeinrichtung ist beispielsweise aus der US 5 464 250 bekannt. Als Abstandshalter wirkt hier ein zick-zackförmig verlaufender Gewebeabschnitt, der an den Randabschnitten mit den Gewebelagen vernäht ist. Dieser Abstandshalter bewirkt, daß der Gassack nicht übermäßig stark ausbaucht, d.h. zwischen seinen Rändern keine allzu große Dicke einnimmt. Andere Arten von Abstandshalter sind sogenannte Fangbänder, die mit den Gewebelagen an ihren Enden vernäht sind und lokal den Abstand begrenzen. Das Anbringen von Abstandshaltern ist sehr teuer und aufwendig und behindert das Umstülpen des Gassacks nach dem Vernähen. Die Anordnung der Abstandshalter ist deshalb sehr kompliziert und nicht an jeder beliebigen Stelle aus Fertigungsgründen möglich. Auf der anderen Seite würden die aufgeblasenen Gassäcke ohne die Abstandshalter unnötig dick werden, was Probleme aufwirft. Die optimale Rückhaltung erfordert teilweise keine extreme Dicke des Gassacks, so daß nur unnötig viel Gas erforderlich ist, um den Gassack prall zu füllen. Zudem erhöht sich mit ansteigender Dicke auch die Gefahr für den Insassen, von dem sich entfaltenden Gassack getroffen zu werden.

Es werden aus diesem Grund Seitengassäcke, sogenannte window bags, hergestellt, die zahlreiche parallele, schmale Kammern aufweisen. Die Gewebelagen sind dabei am Außenumfang des Gassacks und zwischen den Kammern einstückig miteinander verwoben. Die zahlreichen, zum Teil langgestreckten und einen niedrigen Querschnitt aufweisenden Kammern können die Aufblaszeit des Gassacks erhöhen. Sie erfordern zudem eine exakte Gasführung zu den Kammern selbst, z.B. eine Gaslanze, die sich längs des Dachrahmens erstreckt.

Aus der US 5 322 322 ist ein schlauchförmiger, langgestreckter Gassack bekannt, der sich im aufgeblasenen Zustand vom unteren Bereich der A-Säule bis zum Dachrahmen im Bereich des Heckinsassen schräg aufwärts erstreckt. Das verwendete Gewebematerial verläuft dabei in etwa unter 45° zur Längserstreckung, um einen Verkürzungs- und Abspanneffekt zu erzielen. Der Gassack kann sich aufgrund dieses Fadenverlaufs im Querschnitt beim Aufblasen deutlich ausdehnen und in Längsrichtung verkürzen. Durch die starke Dehnung und durch die extreme Bewegung der Fäden muß ein im eigentlichen Gassack untergebrachter zweiter Gassack für die notwendige Gasdichtigkeit sorgen.

Die GB-A-2312877 offenbart einer Gassack gemäß dem Oberbegriff der Anspruch 1.

Die Erfindung schafft eine Gassack-Schutzeinrichtung mit einem Gassack, der sich durch extrem einfach und billig herzustellende Abstandshalter auszeichnet, wobei die Abstandshalter noch dazu für die Abspannung sorgen und die Strömung innerhalb des Gassacks weniger beeinflussen als bisher bekannte. Ferner zeichnet sich der erfindungsgemäße Gassack dadurch aus, daß die Abstandshalter an beliebigen Stellen und in beliebiger Anzahl vorhanden sein können, ohne die Herstellung des Gassacks deutlich zu verteuern oder zu erschweren. Dies wird bei einer Gassack-Schutzeinrichtung der eingangs genannten Art dadurch erreicht, daß der Abstandshalter durch einige der Kett- und/oder Schußfäden gebildet ist, die, bezogen auf den aufgeblasenen Zustand, die durch ihre zugeordnete Gewebelage gebildete Fläche verlassen und sich in Richtung zur gegenüberliegenden Gewebelage erstrecken und mit Kett- und/oder Schußfäden der gegenüberliegenden Gewebelagen verbunden sind. Beim erfindungsgemäßen Gassack wird der Abstandshalter durch einige Kett- und/oder Schußfäden gebildet, die den Gewebeverbund sozusagen verlassen und sich in Richtung zur gegenüberliegenden Gewebelage erstrecken. Der Abstandshalter ist damit kein separates, an den Gewebelagen zu befestigendes Teil, sondern er ist integraler Bestandteil der Gewebelagen. Die Technik des partiell Miteinanderverwebens von Gewebelagen läßt es zu, die Abstandshalter an beliebigen Stellen zu positionieren. Darüber hinaus behindern die einzelnen Kett- und/oder Schußfäden in dem Bereich, in dem sie als Abstandshalter wirken, die Strömung innerhalb des Gassacks nur geringfügig, da sie nicht zwingend als flächiges Gewebe im Bereich des Abstandshalters ausgebildet sein müssen. So kann das Gas zwischen den einzelnen Fäden hindurchströmen und zu einer schnellen Entfaltung des Gassacks führen. Durch die billige und variable Technik des einstückig miteinander Verwebens lassen sich durch die Erfindung erstmals großflächige, nahezu matratzenartige Gassäcke kostengünstig herstellen. Der oder die Abstandshalter sorgen für eine Verkürzung des Gassacks im Bereich der Verbindungsgeraden, indem, in einem Schnitt längs der Verbindungsgeraden gesehen, Fäden den Gewebeverbund in Richtung Gassackinneres verlassen, wodurch sich eine längere Wegstrecke für die Fäden ergibt als für Fäden, die den Gewebeverbund nicht verlassen.

Die als Abstandshalter fungierenden Kett- und/oder Schußfäden können nach dem Verlassen der durch ihre zugeordnete Gewebelage gebildeten Fläche (üblicherweise die Außenwand des Gassacks) und nach Bildung des Abstandshalters entweder in die gegenüberliegende Gewebelage übergehen, somit integraler Bestandteil dieser Gewebelage werden. Darüber hinaus können die Abstandshalter aber auch nach Bildung des Abstandshalters wieder zurück zu der ihr zugeordneten Gewebelage verlaufen und in diese integral übergehen. Dann müssen sie jedoch im Bereich des Abstandshalters mit Kett- und/oder Schußfäden der gegenüberliegenden Gewebelagen verbunden sein. Dies kann z.B. dadurch erreicht werden, daß auch aus der gegenüberliegenden Gewebelage Kett- und/oder Schußfäden aus dem Verbund gelöst werden und sich zwischen den beiden Außenwänden des Gassacks mit den aus dem Gewebeverbund der gegenüberliegenden Gewebelage herausgelösten Kett- und/oder Schußfäden verbinden.

Auf diese Weise lassen sich beispielsweise Abstandshalter erzeugen, die im Querschnitt gesehen eine H-, eine X- oder eine Y-Form bilden.

Die Kett- und/oder Schußfäden, die den Abstandshalter bilden, fehlen im Bereich des Abstandshalters in der ihr zugeordneten Gewebelage. Die Gewebelage wird damit an dieser Stelle weniger gasdicht. Dies kann bewußt dazu verwendet werden, der Gassackaußenwand eine bestimmte Gasdurchlässigkeit zu geben. Wenn die Gasdurchlässigkeit jedoch zu groß wird, kann die Gewebelage, die die Kett- und/oder Schußfäden zur Verfügung stellt, auch wenigstens im Bereich des Abstandshalters beschichtet sein. Unter anderem bei Seitengassäcken, die möglichst lange prall gefüllt sein sollen, sind die Gewebelagen vorzugsweise außenseitig mit Folie beschichtet. Damit können auch zahlreiche Abstandshalter vorgesehen sein, denn es ist durch die Beschichtung mit Folie bezüglich der Gasdurchlässigkeit nicht mehr nachteilig, daß die Außenwand im Bereich der Abstandshalter nur noch wenige Fäden aufweist. Das Gewebe selbst bildet damit im wesentlichen nur noch eine Tragstruktur, und die eigentliche Gasdichtigkeit wird durch die Folie erreicht.

Wenn der Gassack ein großflächiger Seitengassack ist und mehrere Kammern aufweist, die durch einstückiges Miteinanderverweben der gegenüberliegenden Gewebelagen gebildet sind, sind zusätzlich die oben beschriebenen Abstandshalter innerhalb der Kammern vorgesehen. Obwohl die Kammern selbst einen geringen Querschnitt haben, läßt sich die Dicke des Gassacks durch die Abstandshalter nochmals verringern und auf das für die Rückhaltung ausreichende Maß herabsetzen.

Die Abstandshalter können langgestreckt und z.B. linienförmig verlaufen, also eine langgestreckte, gasdurchlässige Wand bilden. Die Abstandshalter können aber auch nur punktförmig oder ringförmig sein, ähnlich wie bei einer Bettmatratze, wo außenseitig sichtbare Knöpfe das Ende von Abstandshaltern bilden.

Bezüglich der ringförmigen Ausbildung ist noch näher zu erläutern, daß diese Ringform durch Austritts- und/oder Eintrittsstellen, an denen aus einer/in eine Gewebelage Fäden zur Bildung eines Abstandshalters herauslaufen bzw. hineinlaufen, gebildet wird, indem sich die Austritts- und/oder Eintrittsstellen zu einer Ringform, vorzugsweise Kreisringform ergänzen. Die Gewebelage mit den sich zu einem Ring ergänzenden Austritts-/Eintrittsstellen hat im aufgeblasenen Zustand des Gassacks eine dom-, kuppel- oder kugelsegmentförmige Gestalt. Wenn die Austrittsstellen sehr eng aneinanderliegen, kann der Ring ausgefüllt sein, so daß sich die Austrittsstellen eines Abstandshalters zu einer Punktform ergänzen. Um eine ausreichende Abspannwirkung zu erreichen, sind vorzugsweise zahlreiche, auf einer Reihe liegende, aufeinanderfolgende Ringe vorgesehen, wobei die Reihe zur Verbindungsgeraden ausgerichtet sein sollte. Wenn ein großflächiger, kissenförmiger oder matratzenförmiger Gassack eingesetzt wird, können mehrere aufeinanderfolgende Reihen, vorzugsweise parallele Reihen von Ringen vorgesehen sein: Sind die Ringe benachbarter Reihen zueinander seitlich versetzt, wird der Gassack im Bereich der Abstandshalter sogar gegebenenfalls durch ineinander übergehende dom-, kuppel- oder kugelsegmentförmige Bereiche gebildet.

Die erfindungsgemäße Schutzeinrichtung ist vorzugsweise eine Seitengassack-Schutzeinrichtung, zum Schutz des Kopfes des Insassen, die sich seitlich des Kopfes des Insassen, im Bereich dessen möglicher Sitzpositionen, erstreckt und die Seitenscheibe größtenteils abdeckt und sich quer zur Seitenscheibe erstreckt. Längs der Verbindungsgeraden der Abspannstellen, die an entgegengesetzten Enden des Gassacks vorgesehen sein sollten, reihen sich zahlreiche Abstandshalter aneinander, wobei sogar der gesamte Abschnitt der Verbindungsgeraden im Bereich einer Kammer oder mehrerer Kammern durch zahlreiche Abstandshalter, die sich aneinanderreihen, gebildet ist.

Eine Ausführung sieht vor, daß sich die Kett- oder Schußfäden parallel zu der Verbindungsgeraden erstrecken.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine aufgeblasene Kopf-Seitengassack-Schutzeinrichtung nach der Erfindung gemäß einer ersten Ausführungsform,
Figur 2 eine perspektivische Ansicht einer aufgeschnittenen einzelnen Kammer des in Figur 1 gezeigten Gassacks in aufgeblasenem Zustand,
Figur 3 eine Querschnittsansicht durch zwei andere Ausführungsformen der Erfindung im nicht aufgeblasenen Zustand des Gassacks,
Figur 4 den Bereich des in Figur 3 gezeigten Gassacks in aufgeblasenem Zustand,
Figur 5 eine Querschnittsansicht durch einen Gassack in aufgeblasenem Zustand gemäß einer vierten und fünften Ausführungsform,
Figur 6 eine Kopf-Seitengassack-Schutzeinrichtung in aufgeblasenem Zustand gemäß einer sechsten Ausführungsform,
Figur 7 eine Seitenansicht einer erfindungsgemäßen Kopf-Seitengassack-Schutzeinrichtung nur für den Frontinsassen,
Figur 8 eine Draufsicht auf den aufgeblasenen Gassack nach Figur 7,
Figur 9 eine perspektivische Ansicht des Gassacks nach Figur 7,
Figur 10 eine weitere Ausführungsform einer erfindungsgemäßen Kopf-Seitengassack-Schutzeinrichtung für den Frontinsassen im eingebauten, aufgeblasenen Zustand,
Figur 11 noch eine Ausführungsform einer erfindungsgemäßen Kopf-Seitengassack-Schutzeinrichtung mit einem Gassack für den Front- und den Heckinsassen,
Figur 12 eine Seitenansicht einer Seitengassack-Schutzeinrichtung gemäß einer anderen Ausführungsform,
Figur 13 eine Modifikation der Seitengassack-Schutzeinrichtung von Figur 11,
Figur 14 eine perspektivische Ansicht der Seitengassack-Schutzeinrichtung nach Figur 13 in teilweiser Schnittansicht.

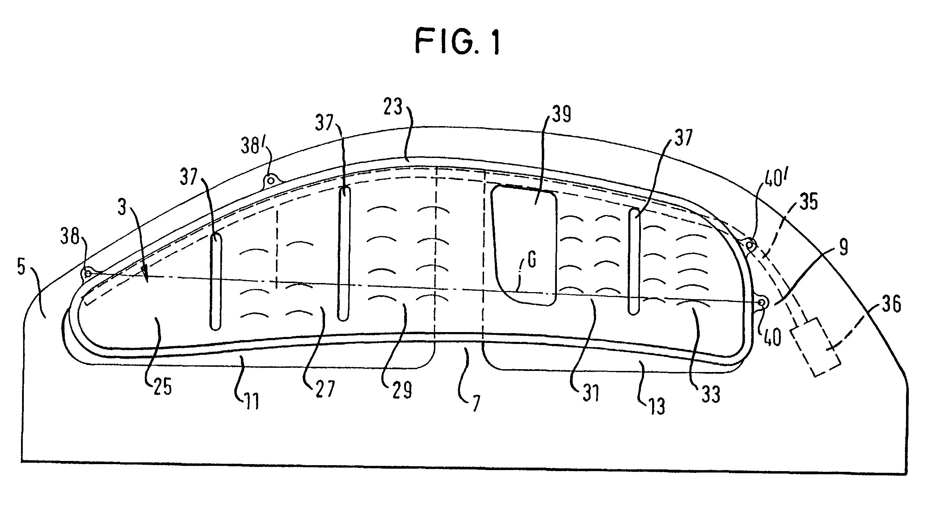

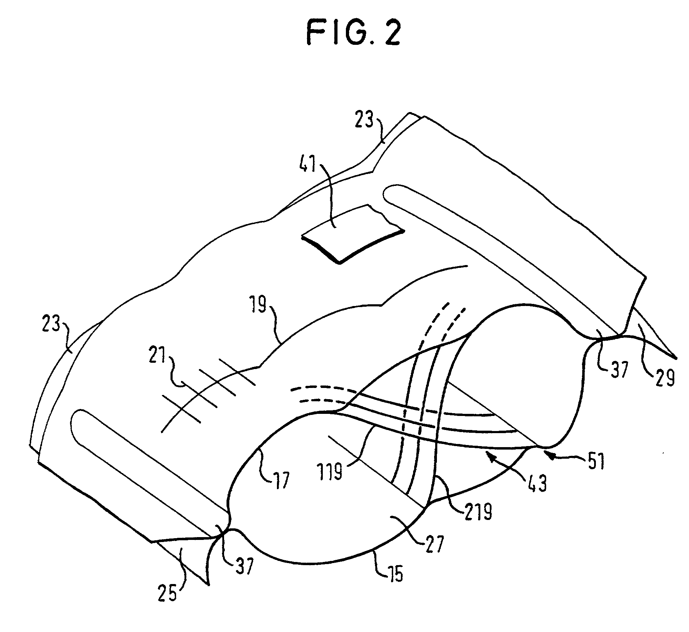

In Figur 1 ist eine Gassack-Schutzeinrichtung mit einem Kopf-Seitengassack 3 dargestellt, der sich im aufgeblasenen Zustand im Fahrzeug von der A-Säule 5, über die B-Säule 7 bis zur C-Säule 9 erstreckt und die Seitenscheiben 11, 13 vollständig abdeckt. Der Seitengassack 3 ist großflächig und matratzenförmig mit nahezu konstanter Dicke im aufgeblasenen Zustand ausgebildet. Er besteht aus zwei Gewebelagen 15, 17, die in Figur 2 besser zu erkennen sind. Die Gewebelagen 15, 17 bilden die Außenwände des Gassacks. Beide Gewebelagen 15, 17 bestehen aus Kett- und Schußfäden 21 bzw. 19, wobei in Figur 2 exemplarisch mehrere Kett-Fäden 21 und ein Schußfaden 19 dargestellt sind. Die beiden Gewebelagen 15, 17 sind im Bereich des Außenumfangs 23 einstückig miteinander verwoben.

Der Gassack besteht aus mehreren Kammern 25 bis 33, die strömungsmäßig am unteren Rand des Gassacks miteinander verbunden sind. Eine sogenannte Gaslanze 35 erstreckt sich von der C-Säule 9, ausgehend von einem Gasgenerator 37 in das Innere des Gassacks und verläuft längs des Dachrahmens bis zur A-Säule 5. Zwischen den Kammern 25 bis 33 sind die Gewebelagen 15, 17 in den Bereichen 37, die Trennwände darstellen, ebenfalls einstückig miteinander verwoben. Der Bereich 39 ist großflächig miteinander verwoben, stellt ebenfalls eine Trennwand dar und ist in einem Bereich angeordnet, der vom Kopf des Insassen weit entfernt liegt. Die Trennwände 37, 39 sind gasdicht, so daß sie keine Gasströmung von einer in die benachbarte Kammer erlauben.

Der Gassack ist auf der Außenseite beider Gewebelagen 15, 17 durch jeweils eine Folie 41 beschichtet, wobei in Figur 2 nur exemplarisch ein kleiner Abschnitt der Folie 41 zu sehen ist. Tatsächlich bedeckt die Folie 41 die gesamte Außenseite beider Gewebelagen 15, 17. Die Folie 41 stellt sicher, daß der Gassack 3 gasdicht ist.

Am Außenumfang 23 sind mehrere ösenartige Fortsätze vorgesehen, die Abspannstellen 38, 38', 40, 40' am Gassack 3 definieren, an denen er an der A-Säule 5 und der C-Säule 9 befestigt ist. Im aufgeblasenen Zustand verspannt sich der Gassack 3 selbst zwischen den Abspannstellen 38 und 40, die an den Längsenden des Gassacks 3 vorgesehen sind, und es kann auch noch eine Abspannung zwischen den Abspannstellen 38' und 40' erfolgen. Zwischen den Abspannstellen 38 und 40 ergibt sich eine gedachte Verbindungsgerade G, die im wesentlichen horizontal verläuft und sich quer über die Seitenscheiben 11, 13 erstreckt. Für die Verspannung des Gassacks sind insbesondere die unteren Abspannstellen 38, 40, die zudem an den entgegengesetzten Längsenden vorgesehen sind, von besonderer Bedeutung, denn bereits nur durch die Abspannung längs der Verbindungsgeraden G und zusätzlichen Befestigungsstellen im Bereich des Dachrahmens oder den oberen Abschnitten der A-Säule 5 oder der C-Säule 9 ergibt sich eine stabile Rückhaltung. Im folgenden wird erläutert, daß die Verspannung allein durch eine besondere Form von Abstandshaltern 43 erreicht wird.

Figur 2 ist zu entnehmen, wie es erreicht wird, daß der Gassack im Bereich jeder Kammer 27 bis 33 nur eine geringe Dicke aufweist, sich aber dennoch zwischen seinen Befestigungsstellen 38, 40 verspannt. In jeder Kammer ist wenigstens ein oder sind mehrere Abstandshalter 43 angeordnet, die die Gewebelagen 15, 17 auf Abstand halten. Die Abstandshalter 43 sind durch Fäden der Gewebelagen 15, 17 gebildet, die den Gewebeverbund auf einer bestimmten Strecke verlassen und schließlich wieder in den Gewebeverbund der ursprünglichen Gewebelage oder der gegenüberliegenden Gewebelage übergehen. Die Abstandshalter 43 sind deshalb einstückig in die Gewebelagen 15, 17 integriert.

In Figur 2 sind exemplarisch hierzu einige Schußfäden 119 aus der oberen Gewebelage dargestellt. Die Schußfäden 119 verlaufen, bezogen auf die Seitenansicht nach Fig. 1, parallel zur Verbindungsgeraden G. Die Schußfäden 119 sind in dem Bereich des dem Bezugszeichen 17 zugeordneten Pfeiles noch in die Gewebelage 17 integriert. Die Gewebelage 17 definiert eine Fläche oder, anders ausgedrückt, eine Außenwand des Gassacks. Die Schußfäden 119 verlassen jedoch dann den Gewebeverbund und damit die durch ihre zugeordnete Gewebelage 17 definierte Fläche und erstrecken sich schräg in Richtung zur gegenüberliegenden Gewebelage 15, in die sie dann im Bereich 51 übergehen. Umgekehrt sind Schußfäden 219 aus der unteren Gewebelage 15 im Bereich des Pfeiles des Bezugszeichens 15 zwar noch im Gewebeverbund vorhanden; sie verlassen jedoch die Gewebelage 15 im Bereich des Abstandshalters 43 und erstrecken sich schräg in Richtung zu der gegenüberliegenden Gewebelage 17, in die sie dann schließlich übergehen. Die Schußfäden 119, 219 bilden, im Querschnitt gesehen, ein "X". Die Schußfäden 119, 219 treffen sich damit zwar, sind aber zwischen den Gewebelagen 15, 17 nicht miteinander verbunden. Dadurch, daß nur einzelne Schußfäden 119, 219 die Gewebelagen 17 bzw. 15 verlassen, ergibt sich keine Trennwand, aber ein Abstandshalter 43, der linear und parallel zu den Trennwänden 37 über nahezu die gesamte Höhe des Gassacks 3 verläuft.

Anstatt der oder zusätzlich zu den Schußfäden 19 können auch Kettfäden 21 aus den Gewebelagen 15, 17 heraus in Richtung der gegenüberliegenden Gewebelage verlaufen, um einen Abstandshalter zu bilden.

Da die die Abstandshalter bildenden Fäden ins Innere und wieder zurück in einen Gewebeverbund verlaufen, ergibt sich ein Verkürzungseffekt, der zum Verspannen des Gassacks quer über die Seitenscheiben 11, 13 führt.

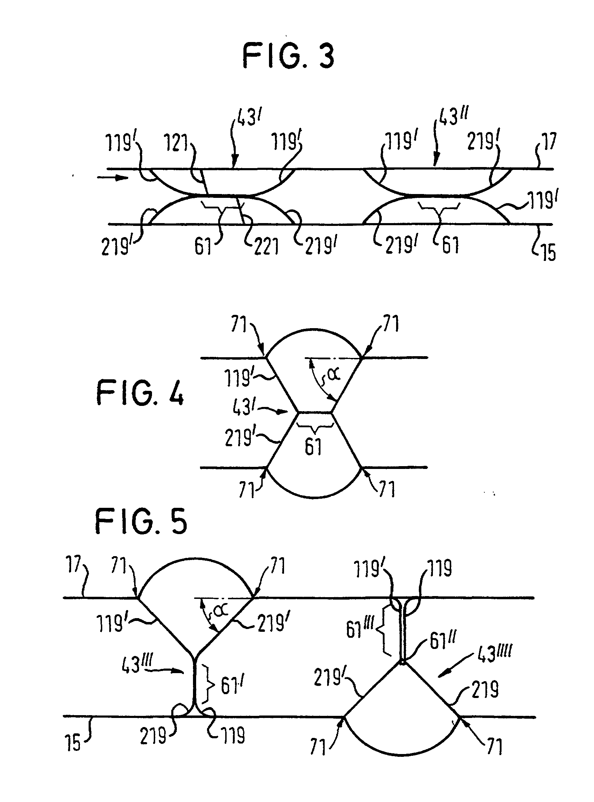

Figur 3 zeigt zwei verschiedene Ausführungsformen des Abstandshalters. Bei der linken Ausführungsform wird der Abstandshalter 43' dadurch gebildet, daß Kettfäden 119' aus der Gewebelage 17 (in Pfeilrichtung, d.h. von links nach rechts beschrieben) die Gewebelage 17 verlassen und in Richtung Gewebelage 15 verlaufen. Ebenso verlassen Kettfäden 219' die Gewebelage 15 in Richtung zur Gewebelage 17. Die Kettfäden 119' und 219' treffen sich und werden in einem Bereich 61 miteinander verbunden, indem Schußfäden 121 aus der oberen Gewebelage 17 und 221 aus der unteren Gewebelage 15 sich bis in den Bereich 61 erstrecken und mit den Kettfäden 119', 219' verbunden, z.B. verwoben sind. Nach dem Bereich 61 verlaufen die Kettfäden 119', 219' ebenso wie die Schußfäden 121, 221 wieder zurück in die ihr zugeordneten Gewebelagen 17 bzw. 15. Es ergibt sich bei dieser Ausführung vorzugsweise eine achssymmetrische Struktur des Abstandshalters 43', wobei die Symmetrieachse vertikal verläuft.

Bei der in Figur 3 rechten Ausführungsform ist der Abstandshalter 43" dadurch gebildet, daß die Kettfäden 119', 219' in Richtung zur gegenüberliegenden Gewebelage 15 bzw. 17 verlaufen, im Bereich 61 miteinander verbunden sind, dann aber nicht zurück zu der ihr zugeordneten Gewebelage, sondern zu der gegenüberliegenden Gewebelage verlaufen und in diese Gewebelage übergehen. Aus Gründen der Übersichtlichkeit sind in der rechten Ausführungsform die Schußfäden 121, 221 nicht dargestellt, obwohl sie zur Schaffung des Bereichs 61 vorhanden sind.

In Figur 3 ist der dargestellte Abschnitt des Gassacks im nicht aufgeblasenen, aber geringfügig auseinandergezogenen Zustand dargestellt. In Figur 4 hingegen ist der Gassack im Bereich des Abstandshalters 43' in aufgeblasenem Zustand dargestellt. Zu sehen ist, daß sich im aufgeblasenen Zustand eine H-Form des Abstandshalters 43' ergibt, mit vertikalen Schenkeln, die zu ihren freien Enden hin jeweils schräg nach außen verlaufen, und einem Verbindungsschenkel, der durch den Bereich 61 gebildet ist. Zwischen den Aus- oder Eintrittsstellen 71, an den die zur Bildung des Abstandshalters vorgesehenen Fäden aus der Gewebelage herauslaufen bzw. hineinlaufen, wölbt sich der Gassack geringfügig nach außen. Insgesamt ergibt sich somit eine Art Matratzenform.

Bei der in Figur 5 dargestellten Ausführungsform haben die Abstandshalter 43"' und 43"" im Querschnitt eine Y-Form. Diese wird dadurch gebildet, daß die sich aus der Gewebelage 17 herauslösenden Kettfäden 119' in einem Bereich 61' (Mittelsteg des Y) mit den sich herauslösenden Kettfäden 219' verbinden. Im V-förmigen oberen Bereich des Y verlaufen die Fäden voneinander getrennt. Anschließend gehen die Kettfäden 119' in die Gewebelage 15 über und die Kettfäden 219' in die Gewebelage 17. Der Bereich 61' grenzt unmittelbar an die Gewebelage 15 an, nur zu Verdeutlichungszwecken ist das untere Ende des Abschnitts 61' etwas aufgelöst dargestellt.

Bei der rechten Ausführungsform in Figur 5 wird der Abstandshalter 43"" dadurch gebildet, daß die Kettfäden 119' zuerst in Richtung Gewebelage 15 verlaufen, wo sie in einem Bereich 61" mit den Kettfäden 219' aus der Gewebelage 15 verbunden werden. Anschließend verlaufen die Kettfäden 119' wieder zurück in die Gewebelage 17. Bei beiden Ausführungsformen in Figur 5, der linken und der rechten Ausführungsform, sind Schußfäden vorhanden, die die Bereiche 61', 61" und 61"' mit definieren. Bei der rechten Ausführungsform nach Figur 5 muß im übrigen auch sichergestellt sein, daß die Länge der Kettfäden 119' der Länge der Kettfäden 219' im aus dem Gewebeverbund herausgelösten Bereich ist, ansonsten würden sich die Gewebelagen zueinander sehr stark verschieben.

Wenn die Ausführungsformen nach Figur 5 verwendet werden, ist zudem noch zu beachten, daß die Anzahl der Abstandshalter 43"' oder 43"" stets eine gerade Zahl ist, denn im Bereich der Abstandshalter ergibt sich eine Krümmung einer Gewebelage nach außen, wogegen die andere Gewebelage nicht gekrümmt ist. Damit wird auch die mit der Krümmung versehene Wandung in Längsrichtung verkürzt. Nur mit einer geraden Anzahl der Abstandshalter wird diese Verkürzung ausgeglichen.

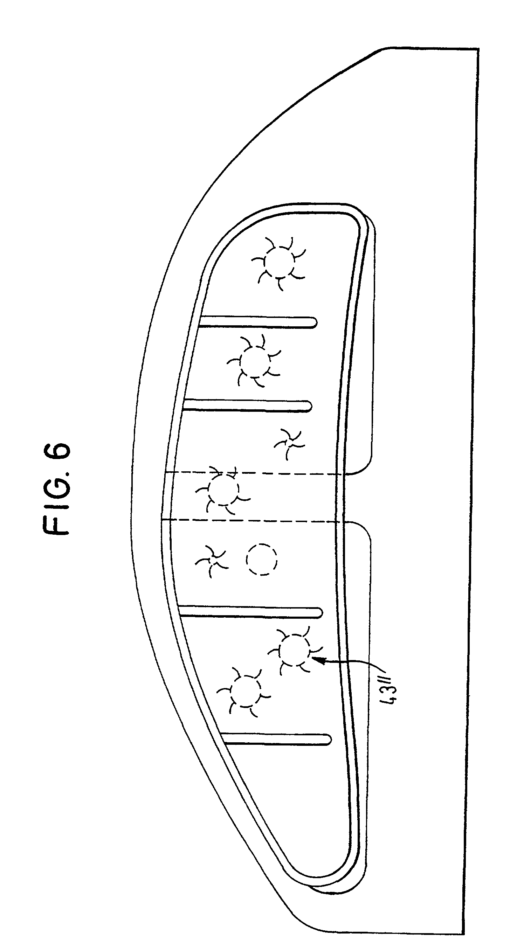

Figur 6 soll darstellen, daß die Abstandshalter nicht nur langgestreckt und linear verlaufen müssen wie in Figur 1, sondern z.B. auch punkt- oder kreisringförmig verlaufen können, z.B. wenn die in den Figuren 2 bis 5 gezeigten Ausführungsformen so gestaltet werden, daß sich die Kett- und Schußfäden im Bereich eines Kreises aus dem Gewebeverbund lösen oder wieder in den Gewebeverbund zurückkehren. Mit anderen Worten ergänzen sich die Aus- und/oder Eintrittsstellen zu einer Ringform, vorzugsweise einer Kreisringform. Zu betonen ist aber, daß durch die in den Figuren 2 bis 5 dargestellten Anordnungen der Fäden beliebige Geometrien von Abstandshaltern erzeugt werden können, indem beispielsweise bei der Ausführungsform nach Figur 2 die Aus- und Eintrittstellen der Fäden sich zu einer Ringform ergänzen oder bei den Ausführungsformen nach den Figuren 3 bis 5 sich die Aus- und Eintrittsstellen zu geraden Linien oder Mehrecken ergänzen.

Der Gasgenerator und die Gassäcke sind so aufeinander abgestimmt, daß bei vollständig aufgeblasenem Gassack die den Abstandshalter bildenden Fäden unter einem Winkel a zwischen 35° und 55° (vgl. Figuren 4 und 5) aus der ihnen zugeordneten Gewebelage heraustreten, um sich in Richtung zur gegenüberliegenden Gewebelage zu erstrecken.

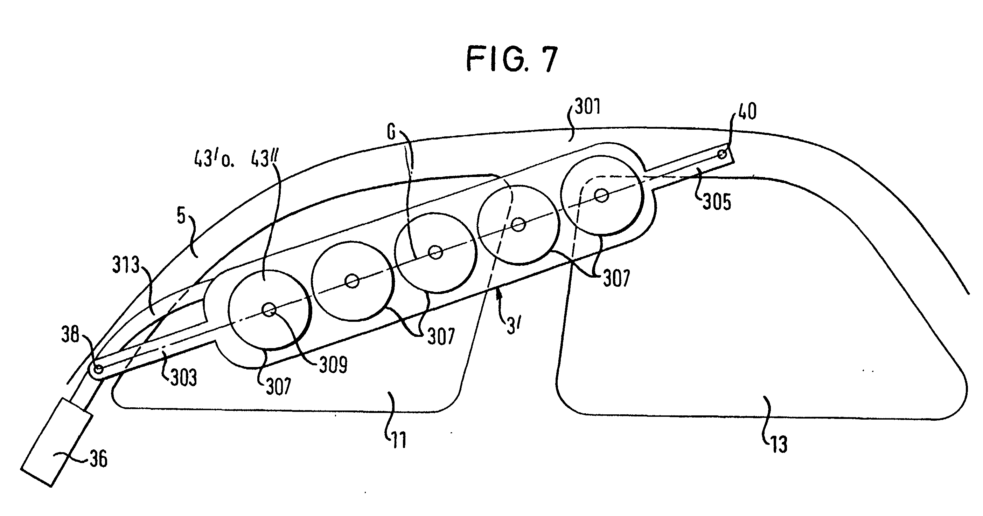

Figur 7 zeigt eine Seitengassack-Schutzeinrichtung nur für den Frontinsassen. Der Gassack ist schlauchförmig ausgebildet und besitzt an seinen entgegengesetzten Längsenden Abspannstellen 38, 40, die an dem unteren Ende der A-Säule 5 bzw. am Dachrahmen 301 in der Mitte der Seitenscheibe 13 für den Heckinsassen befestigt sind. Abspannbänder 303, 305 verbinden den Gassack 3' mit den Abspannstellen 38, 40. Die Abspannlinie, die mit der Verbindungsgeraden G zusammenfällt verläuft schräg aufwärts. Über die gesamte Länge des aufblasbaren Bereichs des Gassacks 3' reihen sich an der Verbindungsgeraden G zahlreiche Abstandshalter 43' oder 43" aneinander, wobei die Austritts- und/oder Eintrittsstellen sich zu einem Kreisring 307 ergänzen, mit gedachten Mittelpunkten 309, die im wesentlichen auf der Verbindungsgeraden G liegen. Die Ringe 307 sind nicht nur auf der in Figur 7 zu sehenden Vorderseite zu sehen, sondern es sind deckungsgleiche Ringe auch auf der Seite, die der Seitenscheibe zugewandt ist, vorgesehen.

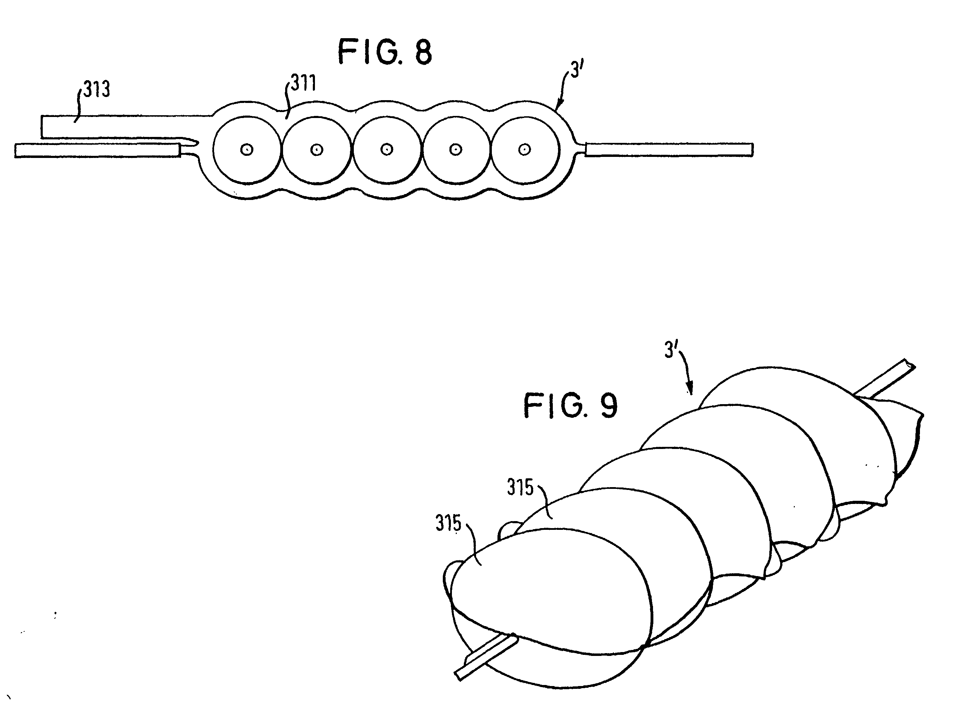

Benachbarte Ringe 307 können sogar aneinander anstoßen, wie Figur 8 zeigt. Von der aufblasbaren Kammer 311 aus erstreckt sich ein schlauchartiger Fortsatz 313 zum Gasgenerator 36, so daß kein separates Verbindungsrohr vorgesehen sein müßte.

Der Gassack 3' hat im aufgeblasenen Zustand die in Figur 9 gezeigte Gestalt, die durch aufeinanderfolgende dom-, kuppel- oder kreissegmentförmige Abschnitte 315 auf beiden entgegengesetzten Seiten gekennzeichent ist, wobei die dom-, kuppel- oder kreissegmentförmigen Abschnitte ineinander übergehen. Diese charakteristische Form der Abschnitte 315 wird durch die Abstandshalter und die Ringe 307 erreicht.

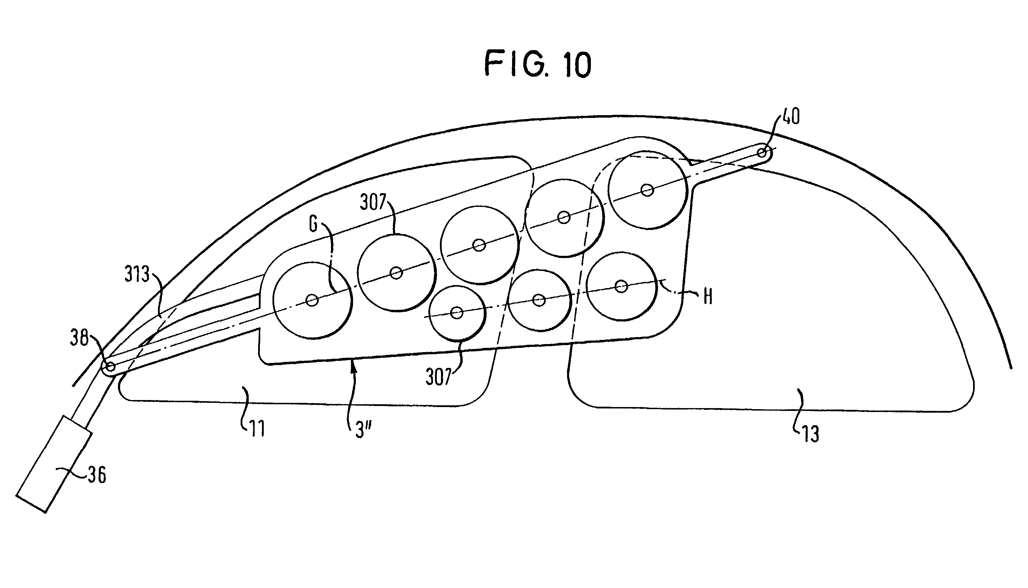

Bei der in Figur 10 dargestellten Ausführungsform erstreckt sich der Gassack noch weiter in Richtung zur Seitenscheibe 13 und deckt diese zum Teil ab. Der Gassack ist auch großflächiger ausgebildet und hat neben der Reihe von Abstandshaltern, die auf der Verbindungsgeraden G, liegen noch eine zweite Reihe von Abstandshaltern, die auf einer Geraden H liegen. Auch diese Abstandshalter sind durch eine Ringform (siehe Ringe 307) charakterisiert. Die Geraden G, H können parallel zueinander verlaufen oder, wie in Figur 10, in einem spitzen Winkel zueinander. Der Gassack in Figur 10 hat das Bezugszeichen 3".

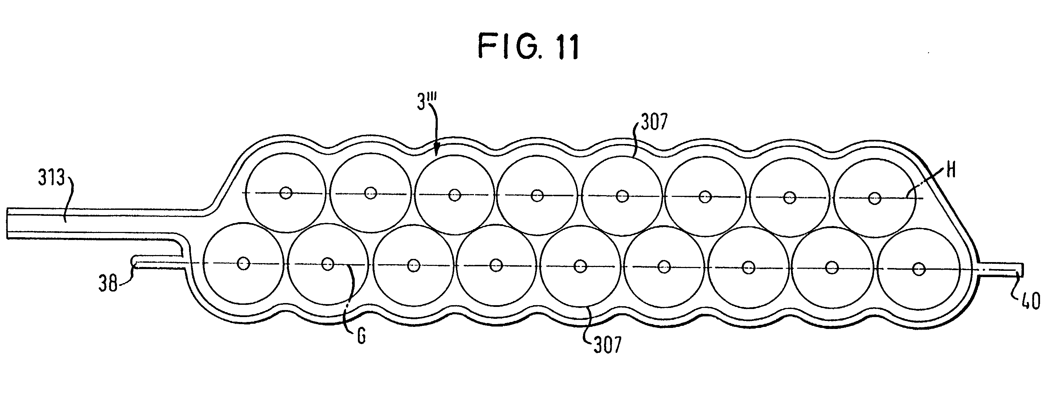

Der Gassack 3''' nach Figur 11 ist mit seinen Abspannstellen 38, 40 auf gleicher Höhe an der A-Säule und der C-Säule befestigt, so daß er sich horizontal über die Seitenscheiben 11, 13 erstreckt, die in Figur 11 nicht gezeigt sind. Die gesamte Kammer des Gassacks wird von Abstandshaltern durchzogen, die in zwei Reihen angeordnet sind, einer Reihe, die auf der Verbindungsgeraden G liegt, und einer Reihe, die auf der hierzu parallelen Geraden H liegt. Die Ringe 307 beider Reihen sind seitlich versetzt zueinander, so daß die Ringe 307 der oberen Reihe teilweise in den Zwischenraum zwischen benachbarten Ringen 307 der unteren Reihe ragen.

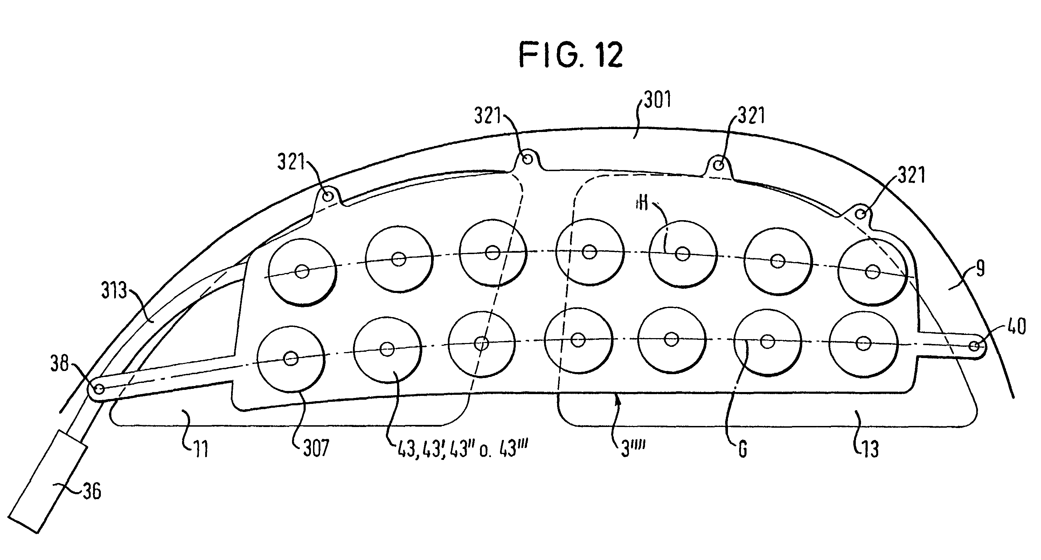

Als Variation der in Figur 11 dargestellten Ausführungsform zeigt Figur 12 einen noch großflächigeren Gassack 3"", der im Gegensatz zu der Ausführungsform nach Figur 11 auch an mehreren Stellen 321 am Dachrahmen 301 oder am oberen Ende der C-Säule 9 befestigt ist. Auch bei dieser Ausführungsform sind zahlreiche aufeinanderfolgende Abstandshalter in Reihen angeordnet. Durch die Befestigung am Dachrahmen 301 ist es möglich, daß die Verbindungsgerade G und die Gerade H zu leicht gebogenen Verbindungslinien G, H werden.

Die in Figur 12 gezeigte Ausführungsform ist eine Variation des Gassacks nach Figur 8, der sich aber parallel zum unteren Ende der Seitenscheiben 11, 13 von der A-Säule 5 horizontal bis zur C-Säule erstreckt und an diesen befestigt ist. Am Gassack 3' ist ein nicht aufblasbares Gewebestück 331 zur Bildung einer Rückhaltewand befestigt, das in Figur 12 schraffiert dargestellt ist. Das Gewebestück 331 ist mit dem unteren Längsrand 333 des Gassacks 3' vernäht, wobei das Bezugszeichen 335 die Naht bezeichnet. Das Gewebestück 313 ist an mehreren Punkten 321 mit dem Dachrahmen oder dem oberen Ende der C-Säule 9 verbunden und wird durch den sich verspannenden Gassack 3' ebenfalls verspannt, so daß eine große Rückhaltefläche zur Verfügung steht.

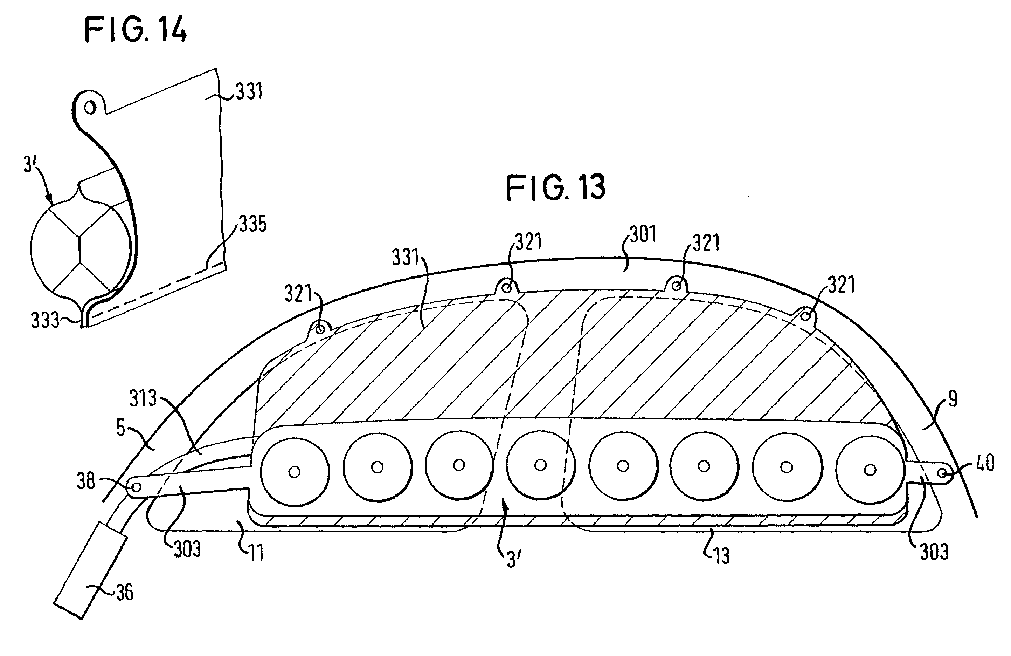

Die in den Figuren 6 bis 13 gezeigten Abstandshalter zwischen den Gewebelagen können abweichend von diesen Ausführungsformen auch so angeordnet werden, daß ihre Eintritts- und Austrittsstellen sich zu eine Ellipse verbinden, deren längere Achse parallel oder senkrecht zum unteren Rand des Gassacks verläuft. Durch diese Anordnung ergibt sich eine weitere Möglichkeit, das Abspannverhalten zwischen den Abspannstellen zu variieren. Zur Abstimmung des Abspannverhaltens in Längsrichtung des Gassacks (zwischen den Abspannstellen) und senkrecht dazu können die längeren Achsen der so gebildeten Ellipsen auch eine definierte Winkellage zwischen der parallel zum unteren Rand verlaufenden Ausrichtung und der senkrecht dazu verlaufenden Ausrichtung einnehmen.

Es ist weiterhin möglich, bei den in den Figuren 6 bis 13 beschriebenen Ausführungsformen die Abstandshalter analog zu den Ausführungsformen gemäß Figuren 2 bis 5 so auszurichten, daß die Eintritts- und Austrittsstellen in der jeweiligen Gewebelage im wesentlichen auf einer geraden oder leicht gekrümmt verlaufenden Linie liegen und somit die Abspannungswirkung eine gezielte Ausrichtung hat, die somit an die Einbauverhältnisse angepaßt werden kann.

## Patentansprüche

1. Gassack-Schutzeinrichtung, mit einem Gassack (3; 3' bis 3"") aus
wenigstens zwei gegenüberliegenden Gewebelagen (15, 17), die wenigstens eine mit Gas befüllbare Kammer (25 bis 33) begrenzen,
wobei die Gewebelagen (15, 17) aus Kett- und Schußfäden (19, 119; 119'; 219; 219'; 21, 121, 221) bestehen, wobei der Gassack
wenigstens einen Abstandshalter (43; 43' bis 43""), der mit den Gewebelagen (15, 17) verbunden ist und in aufgeblasenem Zustand den Abstand der Gewebelagen (15, 17) voneinander begrenzt, und
wenigstens zwei Abspannstellen aufweist, an denen er an dem Fahrzeug zu befestigen ist und zwischen denen er sich sich in aufgeblasenen Zustand verspannt, wobei
der Abstandshalter auf einer Verbindungsgeraden (G) von Abspannstellen vorgesehen ist und eine Verspannung des Gassacks zwischen den Abspannstellen hervorruft,
**dadurch gekennzeichnet, daß**
der Abstandshalter (43; 43' bis 43"") durch einige der Kett- und/oder Schußfäden (19, 119; 119'; 219; 219'; 21, 121, 221) gebildet ist, die, bezogen auf den aufgeblasenen Zustand, die durch ihre zugeordnete Gewebelage (15, 17) gebildete Fläche verlassen und sich in Richtung zur gegenüberliegenden Gewebelage (17 bzw. 15) erstrecken und mit Kett- und/oder Schußfäden (19, 119; 119'; 219; 219'; 21, 121, 221) der gegenüberliegenden Gewebelage (17 bzw. 15) verbunden sind.

2. Gassack-Schutzeinrichtung nach Anspruch 1, **dadurch gekennzeichnet, daß** die als Abstandshalter (43; 43", 43"') fungierenden Kett- und/oder Schußfäden (19, 119; 119'; 219; 219'; 21, 121, 221) die durch ihre zugeordnete Gewebelage (15, 17) gebildete Fläche verlassen und, nach Bildung des Abstandshalters (43, 43", 43"') in die gegenüberliegende Gewebelage (17 bzw. 15) übergehen.

3. Gassack-Schutzeinrichtung nach Anspruch 1, **dadurch gekennzeichnet, daß** die als Abstandshalter (43', 43"") fungierenden Kett- und/oder Schußfäden (19, 119; 119'; 219; 219'; 21, 121, 221), die durch ihre zugeordnete Gewebelage (15, 17) gebildete Fläche zur Bildung des Abstandshalters (43', 43"") verlassen und nach Bildung des Abstandshalters (43', 43"") wieder in die ihnen zugeordnete Gewebelage (15, 17) übergehen.

4. Gassack-Schutzeinrichtung nach einem der vorhergehenden Ansprüche, **dadurch gekennzeichnet, daß** einige der Kett- und/oder Schußfäden (19, 119; 119'; 219; 219'; 21, 121, 221) beider gegenüberliegender Gewebelagen (15, 17) die durch ihre zugeordnete Gewebelage (15, 17) gebildete Fläche in Richtung zur gegenüberliegenden Gewebelage (17 bzw. 15) verlassen und zur gemeinsamen Bildung eines Abstandshalters (43' bis 43"") zwischen den Gewebelagen (15, 17) wenigstens abschnittsweise im Bereich (61 bis 61") des Abstandshalters (43' bis 43"") miteinander verbunden sind.

5. Gassack-Schutzeinrichtung nach Anspruch 4, **dadurch gekennzeichnet, daß** die Verbindung im Bereich (61 bis 61") des Abstandshalters (43' bis 43"") durch Verweben erfolgt.

6. Gassack-Schutzeinrichtung nach Anspruch 4 oder 5, **dadurch gekennzeichnet, daß** die den Abstandshalter (43, 43' bis 43"") bildenden Kett- und/oder Schußfäden (19, 119; 119'; 219; 219'; 21, 121, 221) in aufgeblasenem Zustand des Gassacks und im Querschnitt gesehen eine H-, X- oder Y-Form bilden.

7. Gassack-Schutzeinrichtung nach Anspruch 6, **dadurch gekennzeichnet, daß** zur Bildung der H-Form die den Abstandshalter (43', 43") bildenden Kett- und/oder Schußfäden (19, 119; 119'; 219; 219'; 21, 121, 221) aus gegenüberliegenden Gewebelagen (15, 17) sich aufeinander zu erstrecken und, zur Bildung des Verbindungsschenkels der H-Form, in einem Bereich (61) miteinander verwoben sind und schließlich zu der ihnen zugeordneten oder zur gegenüberliegenden Gewebelage (15, 17) verlaufen und in diese übergehen.

8. Gassack-Schutzeinrichtung nach Anspruch 6, **dadurch gekennzeichnet, daß** zur Bildung der X-Form die den Abstandshalter (43) bildenden Kett- und/oder Schußfäden (19, 119; 119'; 219; 219'; 21, 121, 221) aus gegenüberliegenden Gewebelagen (15, 17) sich aufeinander zu und aneinander vorbei erstrecken und schließlich in die gegenüberliegende Gewebelage (17 bzw. 15) übergehen.

9. Gassack-Schutzeinrichtung nach Anspruch 6, **dadurch gekennzeichnet, daß** der Mittelsteg (61"') der Y-Form durch die Kettund/oder Schußfäden (19, 119; 119'; 219; 219'; 21, 121, 221) einer Gewebelage (17) gebildet ist.

10. Gassack-Schutzeinrichtung nach Anspruch 6, **dadurch gekennzeichnet, daß** der Mittelsteg (61') der Y-Form durch miteinander verbundene Kett- und/oder Schußfäden (19, 119; 119'; 219; 219'; 21, 121, 221) gegenüberliegender Gewebelagen (15, 17) gebildet ist, die im Bereich des V-förmigen Abschnitts der Y-Form voneinander getrennt verlaufen.

11. Gassack-Schutzeinrichtung nach einem der vorhergehenden Ansprüche, **dadurch gekennzeichnet, daß** wenigstens eine Gewebelage (15, 17) wenigstens im Bereich der Abstandshalter (43, 43' bis 43"") beschichtet ist.

12. Gassack-Schutzeinrichtung nach Anspruch 11, **dadurch gekennzeichnet, daß** der Gassack durch eine außenseitig aufgebrachte Folie (41) beschichtet ist.

13. Gassack-Schutzeinrichtung nach einem der vorhergehenden Ansprüche, **dadurch gekennzeichnet, daß** der Gassack mehrere Kammern (25 bis 33) aufweist und der Abstandshalter (43, 43' bis 43"") innerhalb einer Kammer (27 bis 33) vorgesehen ist.

14. Gassack-Schutzeinrichtung nach einem der vorhergehenden Ansprüche, **gekennzeichnet durch** einen Gasgenerator (36), wobei Gasgenerator (36) und Gassack (3 bis 3"") so aufeinander abgestimmt sind, daß bei vollständig aufgeblasenem Gassack (3 bis 3"") die den Abstandshalter (43 bis 43"") bildenden Fäden unter einem Winkel (α) zwischen 35° und 55° aus der ihr zugeordneten Gewebelage heraustreten, um sich in Richtung zur gegenüberliegenden Gewebelage zu erstrecken.

15. Gassack-Schutzeinrichtung nach einem der vorhergehenden Ansprüche, **dadurch gekennzeichnet, daß** sich Austrittsstellen und/oder Eintrittsstellen (71), an denen Fäden zur Bildung eines Abstandshalters (43 bis 43"") aus einer/in eine Gewebelage herauslaufen bzw. hineinlaufen, zu einer Ringform ergänzen und daß die Gewebelage mit den sich zu einem Ring (309) ergänzenden Austritts- und/oder Eintrittsstellen (71) in aufgeblasenem Zustand des Gassacks im Bereich des Ringes (309) eine domförmige oder kugelsegmentförmige Gestalt hat.

16. Gassack-Schutzeinrichtung nach Anspruch 15, **dadurch gekennzeichnet, daß** die Austrittsstellen und/oder Eintrittsstellen (71) sich zu einer Kreisringform ergänzen.

17. Gassack-Schutzeinrichtung nach Anspruch 15 oder 16, **dadurch gekennzeichnet, daß** an beiden Gewebelagen (15, 17) Austrittsstellen und/oder Eintrittsstellen (71) vorgesehen sind, die sich zu einer Ringform ergänzen.

18. Gassack-Schutzeinrichtung nach Anspruch 17, **dadurch gekennzeichnet, daß** die durch die Austrittsstellen und/oder Eintrittsstellen (71) gebildeten Ringe (309) an beiden Gewebelagen (15, 17) deckungsgleich sind.

19. Gassack-Schutzeinrichtung nach einem der Ansprüche 15 bis 18, **dadurch gekennzeichnet, daß** eine Reihe von mehreren aufeinanderfolgenden, durch die Austrittsstellen und/oder Eintrittsstellen gebildeten Ringe (309) vorgesehen ist und daß wenigstens eine zweite, ebenfalls von mehreren aufeinanderfolgenden, durch Austrittsstellen und/oder Eintrittsstellen (71) gebildeten Ringe (309) vorgesehen ist, wobei die Reihen im wesentlichen parallel verlaufen.

20. Gassack-Schutzeinrichtung nach Anspruch 19, **dadurch gekennzeichnet, daß** die Ringe (309) benachbarter Reihen zueinander seitlich versetzt sind.

21. Gassack-Schutzeinrichtung nach einem der vorhergehenden Ansprüche, **dadurch gekennzeichnet, daß** sich ein Abstandshalter (43) linienförmig über einen Abschnitt des Gassacks erstreckt.

22. Gassack-Schutzeinrichtung nach einem der vorhergehenden Ansprüche, **dadurch gekennzeichnet, daß** der Gassack ein Seitengassack (3 bis 3"") ist, der sich im entfalteten Zustand quer über wenigstens eine Seitenscheibe (11, 13) zum Schutz des Kopfes eines Insassen erstreckt und quer über die Seitenscheibe (11, 13) verspannt ist, wobei längs der Verbindungsgeraden (G), die Abspannstellen (38, 40) an den entgegengesetzten Längsenden des Gassacks (3 bis 3"") verbindet, zahlreiche Abstandshalter (43 bis 43"") hintereinander angeordnet sind.

23. Gassack-Schutzeinrichtung nach Anspruch 22, **dadurch gekennzeichnet, daß** der Gassack (3' bis 3"") über den gesamten Abschnitt der Verbindungsgeraden (G), der im Bereich einer aufblasbaren Kammer liegt, zahlreiche Abstandshalter (43 bis 43"") hat.

24. Gassack-Schutzeinrichtung nach Anspruch 23, **dadurch gekennzeichnet, daß** die Kett- oder Schußfäden parallel zu der Verbindungsgeraden (G) verlaufen.

25. Gassack-Schutzeinrichtung nach einem der Ansprüche 22 bis 24, **dadurch gekennzeichnet, daß** der Gassack (3'; 3") Abspannstellen (38, 40) zur Befestigung an der A-Säule (5) und zur Befestigung an der B-Säule (7) oder dem Dachrahmen (301) aufweist.

26. Gassack-Schutzeinrichtung nach Anspruch 25, **dadurch gekennzeichnet, daß** der Gassack (3'; 3") langgestreckt und schlauchförmig ist.

27. Gassack-Schutzeinrichtung nach einem der Ansprüche 22 bis 24, **dadurch gekennzeichnet, daß** sich der Gassack (3; 3'; 3"') von der A-bis zur C-Säule (5, 9) des Fahrzeugs erstreckt und Abspannstellen (38, 40) zur Befestigung an der A- und der C-Säule (5, 9) aufweist und daß sich die Verbindungsgerade (G) im wesentlichen längs des unteren Randes des Gassacks (3; 3'; 3"') bezogen auf den eingebauten und entfalteten Zustand erstreckt.

28. Gassack-Schutzeinrichtung nach Anspruch 27, **dadurch gekennzeichnet, daß** weitere Abstandshalter (43' bis 43"") zwischen den längs des unteren Randes des Gassacks verlaufenden Abstandshaltern (43' bis 43"") und dem im aufgeblasenen Zustand oberen Rand des Gassacks (3"') vorgesehen sind.

29. Gassack-Schutzeinrichtung nach Anspruch 27, **dadurch gekennzeichnet, daß** der Gassack (3') von der Abspannstelle (38) an der A-Säule (15) bis zur Abspannstelle (40) an der C-Säule (9) eine langgestreckte, schlauchförmige Gestalt aufweist und zwischen sich und dem Dachrahmen (301) eine nicht aufblasbare Rückhaltewand aufspannt.

## Claims

1. A gas bag protective device, comprising a gas bag (3; 3' to 3"") made of
at least two opposite fabric layers (15, 17), which define at least one chamber (25 to 33) adapted to be filled with gas,
the fabric layers (15, 17) consisting of warp and weft threads (19, 119; 119'; 219; 219'; 21, 121, 221), the gas bag
having at least one spacer (43; 43' to 43""), which is connected with the fabric layers (15, 17) and in the inflated state limits the spacing of the fabric layers (15, 17) from each other, and
having at least two anchoring points at which it is to be fastened to the vehicle and between which it braced itself in the inflated state,
the spacer being provided on a straight connecting line (G) of anchoring points and bringing about a bracing of the gas bag between the anchoring points,
**characterized in that**
the spacer (43; 43' to 43"") is formed by some of the warp and/or weft threads (19, 119; 119'; 219; 219'; 21, 121, 221) which, in relation to the inflated state, leave the area defined by their associated fabric layer (15, 17) and extend towards the opposite fabric layer (17 or, respectively, 15) and are connected with warp and/or weft threads (19, 119; 119'; 219; 219'; 21, 121, 221) of the opposite fabric layer (17 or, respectively, 15).

2. The gas bag protective device according to Claim 1, **characterized in that** the warp and/or weft threads (19, 119; 119'; 219; 219'; 21, 121, 221) acting as spacers (43; 43", 43''') leave the area defined by their associated fabric layer (15, 17) and after formation of the spacer (43, 43", 43''') continue into the opposite fabric layer (17 or, respectively, 15).

3. The gas bag protective device according to Claim 1, **characterized in that** the warp and/or weft threads (19, 119; 119'; 219; 219'; 21, 121, 221) acting as spacers (43', 43"") leave the area defined by their associated fabric layer (15, 17) to form the spacer (43', 43"") and after formation of the spacer (43', 43"") continue again into the fabric layer (15, 17) associated with them.

4. The gas bag protective device according to any of the preceding claims, **characterized in that** some of the warp and/or weft threads (19, 119; 119'; 219; 219'; 21, 121, 221) of the two opposite fabric layers (15, 17) leave the area defined by their associated fabric layer (15, 17) towards the opposite fabric layer (17 or, respectively, 15) and are connected with each other at least in sections in the region (61 to 61 ") of the spacer (43' to 43"") for jointly forming a spacer (43' to 43"") between the fabric layers (15, 17).

5. The gas bag protective device according to Claim 4, **characterized in that** the connection in the region (61 to 61 ") of the spacer (43' to 43"") takes place by weaving.

6. The gas bag protective device according to Claim 4 or 5, **characterized in that** in the inflated state of the gas bag and viewed in cross-section, the warp and/or weft threads (19, 119; 119'; 219, 219'; 21, 121, 221) forming the spacer (43, 43' to 43"") form an H-, X- or Y-shape.

7. The gas bag protective device according to Claim 6, **characterized in that** for the formation of the H-shape the warp and/or weft threads (19, 119; 119'; 219; 219'; 21, 121, 221) from opposite fabric layers (15, 17) forming the spacer (43', 43") extend towards each other and, for the formation of the connecting arm of the H-shape, are woven with each other in a region (61) and finally run to the fabric layer associated with them or to the opposite fabric layer (15, 17) and continue into it.

8. The gas bag protective device according to Claim 6, **characterized in that** for the formation of the X-shape the warp and/or weft threads (19, 119; 119'; 219; 219'; 21, 121, 221) from opposite fabric layers (15, 17) forming the spacer (43) extend towards each other and past each other and finally continue into the opposite fabric layer (17 or, respectively, 15).

9. The gas bag protective device according to Claim 6, **characterized in that** the central arm (61''') of the Y-shape is formed by the warp and/or weft threads (19, 119; 119'; 219; 219'; 21, 121, 221) of one fabric layer (17).

10. The gas bag protective device according to Claim 6, **characterized in that** the central arm (61') of the Y-shape is formed by warp and/or weft threads (19, 119; 119'; 219; 219'; 21, 121, 221), connected with each other, of opposite fabric layers (15, 17), which in the region of the V-shaped section of the Y-shape run separated from each other.

11. The gas bag protective device according to any of the preceding claims, **characterized in that** at least one fabric layer (15, 17) is coated at least in the region of the spacers (43, 43' to 43"").

12. The gas bag protective device according to Claim 11, **characterized in that** the gas bag is coated by a foil (41) which is applied on the outside.

13. The gas bag protective device according to any of the preceding claims, **characterized in that** the gas bag has several chambers (25 to 33) and the spacer (43,43' to 43"") is provided inside a chamber (27 to 33).

14. The gas bag protective device according to any of the preceding claims, **characterized by** a gas generator (36), the gas generator (36) and the gas bag (3 to 3"") being coordinated with each other such that with the gas bag (3 to 3"") fully inflated, the threads forming the spacer (43 to 43"") emerge from the fabric layer associated therewith at an angle (α) of between 35° and 55°, to extend towards the opposite fabric layer.

15. The gas bag protective device according to any of the preceding claims, **characterized in that** exit points and/or entry points (71), at which threads for forming a spacer (43 to 43"") run from or into a fabric layer, together form a ring shape and that, in the inflated state of the gas bag, the fabric layer with the exit and/or entry points (71) that together form a ring (309) has a dome-shaped or spherical segment-shaped form in the region of the ring (309).

16. The gas bag protective device according to Claim 15, **characterized in that** the exit points and/or entry points (71) together form a circular ring shape.

17. The gas bag protective device according to Claim 15 or 16, **characterized in that** on both fabric layers (15, 17) exit points and/or entry points (71) are provided, which together form a ring shape.

18. The gas bag protective device according to Claim 17, **characterized in that** the rings (309) formed by the exit points and/or entry points (71) are congruent on the two fabric layers (15, 17).

19. The gas bag protective device according to any of Claims 15 to 18, **characterized in that** a row of several successive rings (309) formed by the exit points and/or entry points is provided and that at least a second row is provided, likewise of several successive rings (309) formed by exit points and/or entry points (71), the rows extending substantially parallel.

20. The gas bag protective device according to Claim 19, **characterized in that** the rings (309) of adjacent rows are staggered laterally with respect to each other.

21. The gas bag protective device according to any of the preceding claims, **characterized in that** a spacer (43) extends linearly over a section of the gas bag.

22. The gas bag protective device according to any of the preceding claims, **characterized in that** the gas bag is a lateral gas bag (3 to 3"") which in the unfolded state extends transversely over at least one side window (11, 13) to protect the head of an occupant and is braced transversely over the side window (11, 13), numerous spacers (43 to 43"") being arranged in succession along the straight connecting line (G) which connects anchoring points (38, 40) at the opposite longitudinal ends of the gas bag (3 to 3"").

23. The gas bag protective device according to Claim 22, **characterized in that** the gas bag (3' to 33"") has numerous spacers (43 to 43"") over the entire section of the straight connecting line (G) which lies in the region of an inflatable chamber.

24. The gas bag protective device according to Claim 23, **characterized in that** the warp or weft threads run parallel to the straight connecting line (G).

25. The gas bag protective device according to any of Claims 22 to 24, **characterized in that** the gas bag (3'; 3") has anchoring points (38, 40) for fastening to the A-column (5) and for fastening to the B-column (7) or to the roof frame (301).

26. The gas bag protective device according to Claim 25, **characterized in that** the gas bag (3'; 3") is elongated and hose-shaped.

27. The gas bag protective device according to any of Claims 22 to 24, **characterized in that** the gas bag (3; 3'; 3"') extends from the A- to the C-column (5, 9) of the vehicle and has anchoring points (38, 40) for fastening to the A- and to the C-column (5, 9) and that the straight connecting line (G) extends substantially along the lower edge of the gas bag (3; 3'; 3"'), as related to the installed and unfolded state.

28. The gas bag protective device according to Claim 27, **characterized in that** further spacers (43' to 43"") are provided between the spacers (43' to 43"") running along the lower edge of the gas bag and the edge of the gas bag (3"') that is the upper edge in the inflated state.

29. The gas bag protective device according to Claim 27, **characterized in that** the gas bag (3') has an elongated, hose-shaped configuration from the anchoring point (38) on the A-column (15) to the anchoring point (40) on the C-column (9), and braces a non-inflatable restraining wall between it and the roof frame (301).

## Revendications

1. Dispositif de protection à coussin à gaz, comportant un coussin à gaz (3 ; 3' à 3 "") en
au moins deux couches de tissu (15, 17) opposées, qui délimitent au moins une chambre (25 à 33) susceptible d'être remplie de gaz,
les couches de tissu (15, 17) étant constituées par des fils de chaîne et des fils de trame (19, 119 ; 119' ; 219, 219' ; 21, 121, 221), le coussin à gaz présentant
au moins un espaceur (43 ; 43' à 43"") qui est relié avec les couches de tissu (15, 17) et qui, à l'état de gonflage, limite la distance entre les couches de tissu (15, 17), et
au moins deux points d'ancrage sur lesquels il doit être fixé sur le véhicule et entre lesquels il se contracte à l'état de gonflage,
l'espaceur étant prévu sur une droite de liaison (G) de points d'ancrage et provoquant une contraction du coussin à gaz entre les points d'ancrage,
**caractérisé en ce que**
l'espaceur (43 ; 43' à 43"") est formé par quelques-uns des fils de chaîne et/ou des fils de trame (19, 119 ; 119' ; 219, 219' ; 21, 121, 221), qui, par rapport à l'état de gonflage, quittent la surface formée par leur couche de tissu (15, 17) associée et s'étendent en direction de la couche de tissu opposée (17 ou 15, respectivement) et qui sont reliés à des fils de chaîne et/ou des fils de trame (19, 119 ; 119' ; 219, 219' ; 21, 121, 221) de la couche de tissu opposée (17 ou 15, respectivement).

2. Dispositif de protection à coussin à gaz selon la revendication 1, **caractérisé en ce que** les fils de chaîne et/ou les fils de trame (19, 119 ; 119' ; 219, 219' ; 21, 121, 221) servant d'espaceurs (43 ; 43", 43"') quittent la surface formée par leur couche de tissu (15, 17) associée et, après la formation de l'écarteur (43, 43 ", 43"'), se fondent dans la couche de tissu opposée (17 ou 15, respectivement).

3. Dispositif de protection à coussin à gaz selon la revendication 1, **caractérisé en ce que** les fils de chaîne et/ou les fils de trame (19, 119 ; 119' ; 219, 219' ; 21, 121, 221) servant d'espaceurs (43 ; 43", 43"') quittent la surface formée par leur couche de tissu (15, 17) associée et, après la formation de l'écarteur (43, 43", 43"'), se fondent de nouveau dans la couche de tissu (15, 17) qui leur est associée.

4. Dispositif de protection à coussin à gaz selon l'une des revendications précédentes, **caractérisé en ce que** quelques-uns des fils de chaîne et/ou des fils de trame (19, 119 ; 119' ; 219, 219' ; 21, 121, 221) des deux couches de tissus (15, 17) opposées quittent la surface formée par leur couche de tissu associée (15, 17) en direction de la couche de tissu opposée (17 ou 15, respectivement) et sont reliés les uns aux autres pour former en commun un espaceur (43' à 43"") entre les couches 15, 17) au moins par tronçons dans la zone (61 à 61") de l'espaceur (43' à 43"").

5. Dispositif de protection à coussin à gaz selon la revendication 4, **caractérisé en ce que** la liaison dans la zone (61 à 61") de l'espaceur (43' 43"") a lieu par tissage.

6. Dispositif de protection à coussin à gaz selon la revendication 4 ou 5, **caractérisé en ce qu'**à l'état de gonflage du coussin à gaz et vus en coupe transversale, les fils de chaîne et/ou les fils de trame (19, 119 ; 119' ; 219, 219' ; 21, 121, 221) formant l'espaceur (43, 43' à 43"") constituent une forme en H, en X ou en Y.

7. Dispositif de protection à coussin à gaz selon la revendication 6, **caractérisé en ce que** pour constituer la forme de H, les fils de chaîne et/ou les fils de trame (19, 119 ; 119' ; 219, 219' ; 21, 121, 221) formant l'espaceur (43, 43' à 43""), de couches de tissu (15, 17) opposées, s'étendent les uns vers les autres et, pour former la traverse de liaison de la forme en H, sont tissés les uns aux autres dans une zone (61) et s'étendent pour finir vers la couche de tissu (15, 17), qui leur est associée ou opposée, et se fondent dans celle-ci.

8. Dispositif de protection à coussin à gaz selon la revendication 6, **caractérisé en ce que** pour constituer la forme en X, les fils de chaîne et/ou les fils de trame (19, 119 ; 119' ; 219, 219' ; 21, 121, 221) de couches de tissus (15, 17) opposées et formant l'espaceur (43, 43' à 43""), s'étendent les uns vers les autres et passent les uns devant les autres et se fondent pour finir dans la couche de tissu opposée (17 ou 15, respectivement).

9. Dispositif de protection à coussin à gaz selon la revendication 6, **caractérisé en ce que** la traverse médiane (61"') de la forme en Y est constituée par les fils de chaîne et/ou les fils de trame (19, 119 ; 119' ; 219, 219' ; 21, 121, 221) d'une couche de tissu (17).

10. Dispositif de protection à coussin à gaz selon la revendication 6, **caractérisé en ce que** la traverse médiane (61') de la forme en Y est constituée par les fils de chaîne et/ou les fils de trame (19, 119 ; 119' ; 219, 219' ; 21, 121, 221) reliés les uns aux autres, de couches de tissu opposées (15, 17) qui s'étendent séparément l'une de l'autre dans la zone du tronçon en forme de V de la forme en Y.

11. Dispositif de protection à coussin à gaz selon l'une des revendications précédentes, **caractérisé en ce qu'**au moins une couche de tissu (15, 17) est enduite au moins dans la zone des espaceurs (43, 43' à 43"").

12. Dispositif de protection à coussin à gaz selon la revendication 11, **caractérisé en ce que** le coussin à gaz est enduit par une feuille (41) appliquée sur la face extérieure.

13. Dispositif de protection à coussin à gaz selon l'une des revendications précédentes, **caractérisé en ce que** le coussin à gaz présente plusieurs chambres (25 à 33) et l'espaceur (43, 43' à 43"") est prévu à l'intérieur d'une chambre (27 à 33).

14. Dispositif de protection à coussin à gaz selon l'une des revendications précédentes, **caractérisé par** un générateur de gaz (36), le générateur de gaz (36) et le coussin à gaz (3 à 3"") étant adaptés l'un à l'autre de telle sorte que lorsque le générateur de gaz (3 à 3"") est totalement gonflé, les fils formant l'espaceur (43 à 43"") sortent de leur couche de tissu associée sous un angle (α) entre 35° et 55° pour s'étendre en direction de la couche de tissu opposée.

15. Dispositif de protection à coussin à gaz selon l'une des revendications précédentes, **caractérisé en ce que** les points de sortie et/ou les points d'entrée (71), au niveau desquels les fils sortent de/ou entrent dans une couche de tissu, forment ensemble un anneau, et **en ce que** la couche de tissu, avec les points de sortie et/ou d'entrée (71) formant ensemble un anneau (309), a dans la zone de l'anneau (309) et à l'état de gonflage du coussin à gaz une configuration en forme de dôme ou de segment sphérique.

16. Dispositif de protection à coussin à gaz selon la revendication 15, **caractérisé en ce que** les points de sortie et/ou d'entrée (71) forment ensemble un anneau circulaire.

17. Dispositif de protection à coussin à gaz selon la revendication 15 ou 16, **caractérisé en ce que** sur les deux couches de tissu (15, 17) sont prévus des points de sortie et/ou d'entrée qui forment ensemble un anneau.

18. Dispositif de protection à coussin à gaz selon la revendication 17, **caractérisé en ce que** les anneaux (309) formés par les points de sortie et/ou les points d'entrée coïncident l'un avec l'autre sur les deux couches de tissu (15, 17).

19. Dispositif de protection à coussin à gaz selon l'une des revendications 15 à 18, **caractérisé en ce qu'**il est prévu une rangée de plusieurs anneaux (309) successifs formés par les points de sortie et/ou les points d'entrée et **en ce qu'**il est prévu au moins une deuxième rangée également de plusieurs anneaux (309) successifs formés par des points de sortie et/ou des points d'entrée (71), les rangées s'étendant de façon sensiblement parallèle.

20. Dispositif de protection à coussin à gaz selon la revendication 19, **caractérisé en ce que** les anneaux (309) de rangées voisines sont décalés latéralement les uns par rapport aux autres.

21. Dispositif de protection à coussin à gaz selon l'une des revendications précédentes, **caractérisé en ce qu'**un espaceur (43) s'étend sous forme linéaire sur un tronçon du coussin à gaz.

22. Dispositif de protection à coussin à gaz selon l'une des revendications précédentes, **caractérisé en ce que** le coussin à gaz est un coussin à gaz latéral (3 à 3"") qui, à l'état de gonflage du coussin à gaz, s'étend transversalement sur une vitre latérale (11, 13) pour protéger la tête d'un occupant et qui est contracté transversalement sur la vitre latérale (11, 13), de nombreux espaceurs (43 à 43"") étant agencés le long de la droite de liaison (G) qui relie des points d'ancrage (38, 40) sur les extrémité longitudinales opposées du coussin à gaz (3 à 3"").

23. Dispositif de protection à coussin à gaz selon la revendication 22, **caractérisé en ce que** le coussin à gaz (3' à 3"") possède de nombreux espaceurs (43 à 43"") sur tout le tronçon de la droite de liaison (G) qui se trouve dans la zone d'une chambre gonflable.

24. Dispositif de protection à coussin à gaz selon la revendication 23, **caractérisé en ce que** les fils de chaîne ou les fils de trame s'étendent parallèlement à la droite de liaison (G).

25. Dispositif de protection à coussin à gaz selon l'une des revendications 22 à 24, **caractérisé en ce que** le coussin à gaz (3' ; 3") présente des points d'ancrage (38, 40) pour la fixation sur la colonne A (5) et pour la fixation sur la colonne B (7) ou sur le cadre de toit (301).

26. Dispositif de protection à coussin à gaz selon la revendication 25, **caractérisé en ce que** le coussin à gaz (3' ; 3 ") est allongé et tubulaire.

27. Dispositif de protection à coussin à gaz selon l'une des revendications 22 à 24, **caractérisé en ce que** le coussin à gaz (3 ; 3' ; 3"') s'étend depuis la colonne A (5) jusqu'à la colonne C (9) du véhicule et présente des points d'ancrage (38, 40) pour la fixation sur la colonne A (5) et sur la colonne C (9), et **en ce que** la droite de liaison (G) s'étend sensiblement le long du bord inférieur du coussin à gaz (3 ; 3' ; 3"') par rapport à l'état de montage et de déploiement.

28. Dispositif de protection à coussin à gaz selon la revendication 27, **caractérisé en ce que** d'autres espaceurs (43' à 43"") sont prévus entre les espaceurs (43' à 43"") s'étendant le long du bord inférieur du coussin à gaz et le bord supérieur du coussin à gaz (3"') à l'état de gonflage.

29. Dispositif de protection à coussin à gaz selon la revendication 27, **caractérisé en ce que** le coussin à gaz (3') présente une forme allongée et tubulaire depuis le point d'ancrage (38) sur la colonne A (15) jusqu'au point d'ancrage (40) sur la colonne C (9) et serre entre lui-même et le cadre de toit (301) une paroi de retenue non gonflable.
